# EUROPÄISCHE PATENTSCHRIFT

(11) **EP 1 554 102 B1**
(45) Veröffentlichungstag und Bekanntmachung des Hinweises auf die Patenterteilung: **04.11.2009**
(21) Anmeldenummer: 03747945.8
(22) Anmeldetag: 28.08.2003
(51) Int. Cl.: B29C 47/00, G06T 15/70

(54) **VERFAHREN ZUR BEDIENUNG UND/ODER ÜBERWACHUNG VON FOLIENEXTRUSIONSANLAGEN UND BEDIENPULT DAFÜR**
METHOD OF OPERATING AND/OR MONITORING FILM EXTRUSION INSTALLATIONS AND OPERATING PANEL THEREFOR
PROCÉDÉ DE COMMANDE ET/OU DE SUPERVISION DES INSTALLATION D'EXTRUSION DE FILMS ET PUPITRE DE COMMANDE DESTINÉ À CET EFFET

(30) Priorität: 25.09.2002 DE 10244869
(43) Veröffentlichungstag der Anmeldung: 20.07.2005
(73) Patentinhaber: Windmöller & Hölscher KG, 49525 Lengerich (DE)
(72) Erfinder: PÄTZOLD, Reinhard, 49078 Osnabrück (DE)
(86) Internationale Anmeldenummer: PCT/EP2003/009632
(87) Internationale Veröffentlichungsnummer: WO 2004/033185

(56) Entgegenhaltungen:
- EP-A- 0 813 169
- PATENT ABSTRACTS OF JAPAN vol. 014, no. 158 (P-1027), 27. März 1990 (1990-03-27) & JP 02 015308 A (SUMITOMO HEAVY IND LTD), 19. Januar 1990 (1990-01-19)

## Beschreibung

Die Erfindung betrifft ein Bedienpult für Folienextrusionsanlagen mit den Merkmalen des Oberbegriffs des Anspruchs 1.

Flach- und Blasfolienextrusionsanlagen sind in hinreichender Weise bekannt. Eine solche Anlage wird beispielsweise in der EP 0 873 846 oder in der Literaturstelle "Ferndiagnose für Folienextrusions-anlagen", Ch. Herschback, Kunststoffe 88 (01/02/1998) Seite 162 gezeigt. In der Regel werden diese Anlagen von einem Bedienpult aus gesteuert. Diese Bedienpulte enthalten in der Regel zumindest folgende Funktionselemente:
- ein Eingabeterminal, an welchem Funktionsparameter der Folienextrusionsanlagen einstellbar sind,
- eine Anzeigevorrichtung, auf welcher die Extrusionsanlage und die zugehörigen Extruder und gegebenenfalls ihre Betriebsparameter dargestellt sind.

Die Bedienpulte sind an einem zugänglichen Teil in der unmittelbaren Umgebung des Extruders aufgestellt. Insbesondere bei Blasfolienextrusionsanlagen, bei denen die Extruder um die Extrusionsanlage herum am Boden angeordnet sind, ist das Bedienpult damit von Extrudern umringt.

Die Darstellung der Extrusionsanlage erfolgt in der Regel skizziert. Bei bekannten Geräten richtet sie sich jedoch nicht nach der tatsächlichen Anordnung der Extruder um die Extrusionsdüse, sondern die Darstellung erfolgt nach anderen Gesichtspunkten. Am häufigsten ist eine Anordnung der Extruder nach ihrer Nummerierung anzutreffen. Hierbei werden die skizzierten Darstellungen der Extruder in der Regel dargestellt, als ob sie entlang einer Linie aufgereiht seien.

Allen bekannten Darstellungsweisen ist jedoch gemein, dass die Extruder nicht gemäß ihrer tatsächlichen Anordnung um die Extrusionsdüse beziehungsweise den Blaskopf angeordnet sind. Dieser Umstand führt insbesondere bei Blasfolienextrusionsanlagen zu Schwierigkeiten.

Maschinenbediener, die an einem Bedienpult der Extrusionsanlage sitzen, welches dem Blaskopf oder - bei der Flachfolienextrusion - der Düse benachbart ist, wissen nicht, ob die Extruder auf dem Bedienpult aus ihrem Blickwinkel richtig herum oder seitenverkehrt dargestellt werden. Aus diesem Grunde müssen sich die Maschinenbediener immer wieder vergewissern, welche Nummern die einzelnen Extruder haben. Ähnliche Probleme bestehen bei der Zuordnung anderer Maschinenelemente, wie dem Bedienpult selbst oder den Wickelstellen.

Ziel der vorliegenden Erfindung ist es daher, ein Bedienpult vorzuschlagen, welches dem Maschinenbediener die Identifikation dieser Maschinenelemente auf der Darstellung auf dem Bedienpult erleichtert. Diese Aufgabe wird dadurch gelöst, dass
- auf der Anzeigevorrichtung die zumindest zweidimensionale Anordnung von Elementen der Extrusionsanlage wie Extrudern oder Wickelstellen zu dem Blaskopf oder der Folienblase dargestellt ist.

Die Erfindung läßt sich sowohl bei Flach- als auch bei Blasfolienextrusionsanlagen einsetzen. Der Begriff "Düse" im Oberbegriff des Hauptanspruchs umfasst damit sowohl eine Breitschlitzdüse als auch einen Blaskopf.

Durch ein erfindungsgemäßes Bedienpult erhält der Maschinenbediener die Möglichkeit, sich besser mit seiner eigenen räumlichen Position in der Anlage zu identifizieren.

Weitere Ausführungsbeispiele der Erfindung gehen aus der gegenständlichen Beschreibung und den Ansprüchen hervor.

Die einzelnen Figuren zeigen:
- Fig.1: Eine Darstellung einer Blasfolienextrusionsanlage nach dem Stand der Technik
- Fig.2: Eine Darstellung einer Blasfolienextrusionsanlage auf einer Anzeigevorrichtung eines erfindungsgemäßen Bedienpults
- Fig. 3: Eine Skizze einer Blasfolienextrusionsanlage mit einem Bedienpult

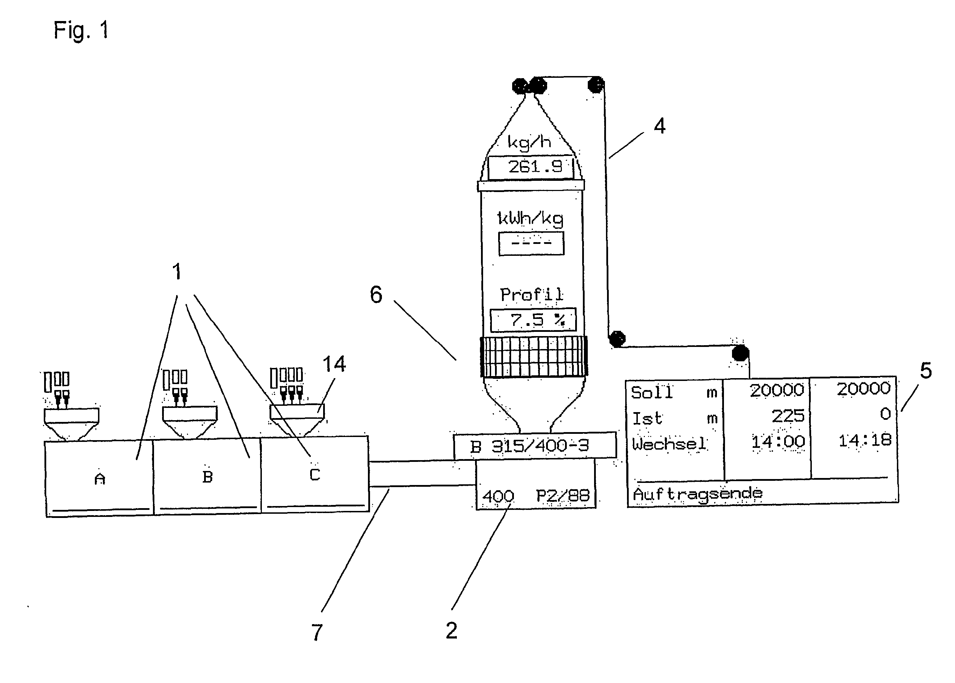

Fig. 1 zeigt eine Ansicht einer bekannten Anzeigevorrichtung. Die Extruder 1 sind mit den Buchstaben A, B, C durchnummeriert und dargestellt, als ob sie auf einer Linie liegen. Damit sind die Konturen der Extruder 1 zwar zweidimensional dargestellt, ihre Anordnung zu dem Blaskopf 2 beziehungsweise der Folienblase 1 ist jedoch auf eine eindimensionale Linie, die überdies neben dem Blaskopf dargestellt ist, reduziert und damit verfälscht. Damit ist die Zuordnung der Extruder für den Bediener erschwert. Neben den Extrudern 1 ist noch die Schmelzezuleitung 7, der Blaskopf 2, die Folienblase 2 und die abgequetschte Folie 4 skizziert auf dem Anzeigeelement 3 dargestellt. Innerhalb der Konturen eines Teils dieser Elemente 2, 3 der Extrusionsanlage werden Maße und Maßzahlen eingeblendet, welche die Betriebsparameter oder die sonstigen Eigenschaften des jeweiligen Elements 2, 3 betreffen. An der Stelle, an der eigentlich eine der Extrusionsanlage zugeordnete Wickelvorrichtung dargestellt sein müsste, ist lediglich ein rechteckig gehaltenes Anzeigefeld 5 vorgesehen, in dem wieder Maße und Maßzahlen, welche Bezug zu einer Wickelvorrichtung haben, dargestellt sind.

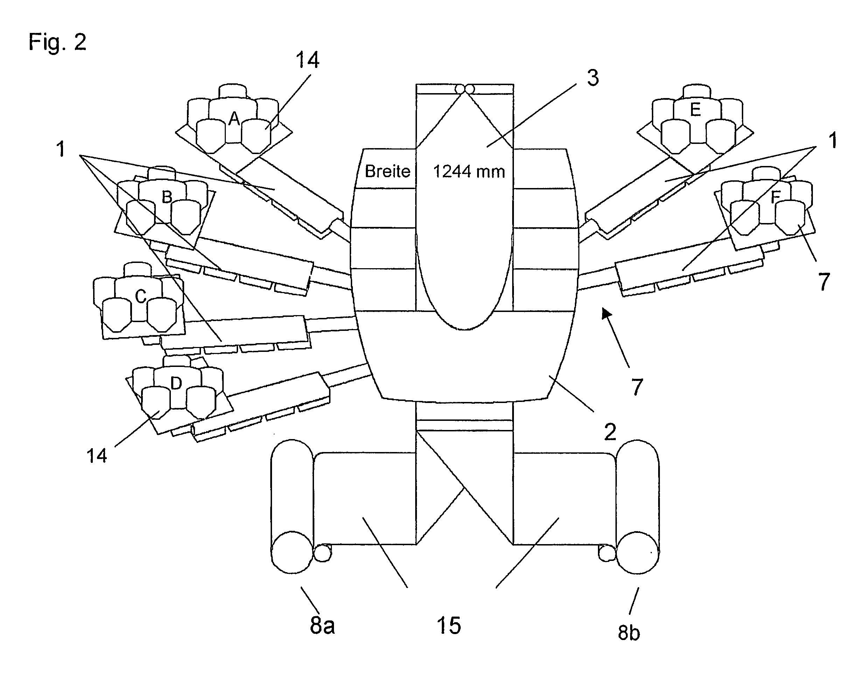

Figur 2 zeigt eine Ansicht eines Anzeigeelements eines erfinderischen Bedienpults. Die Extruder 1, welche wieder mit Großbuchstaben nummeriert sind, sind gemäß ihrer zweidimensionalen Anordnung um Blaskopf 2 und Folienblase 3 dargestellt. Die beiden letztgenannten Elemente und die erstmals skizzierten Wickelstellen 8a und b, welche ebenfalls mit den Großbuchstaben A und B nummeriert sind, zeigen wieder innerhalb ihrer - oder im Falle der Folienblase 3 direkt neben ihren - Konturen Maße und Maßzahlen, welche ihre physikalischen Eigenschaften oder Betriebsparameter betreffen. Damit sind sowohl die Extruder 1 als auch die Wickelstellen gemäß ihrer zweidimensionalen Anordnung zu der Extrusionsanlage dargestellt.

Erwähnenswert ist noch, dass die Extruder 1 in Figur 2 in Form einer perspektivischen Draufsicht dargestellt sind, während die Folienblase 2 in Frontalansicht gezeigt ist.

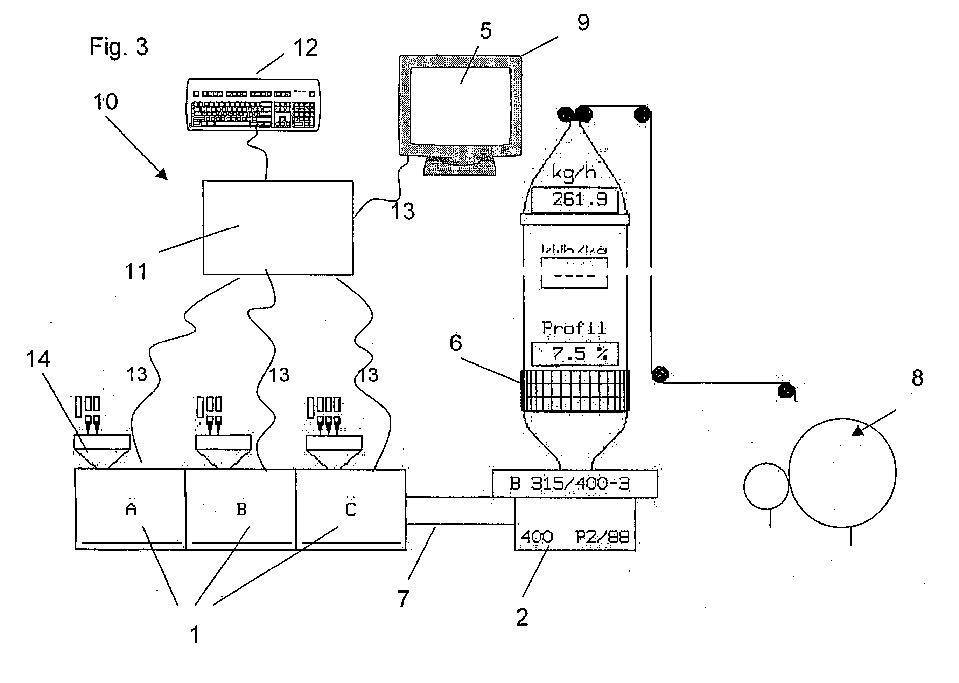

Figur 3 skizziert noch einmal eine Extrusionsanlage, welche neben den in den Figuren bereits gezeigten Maschinenelementen 1 bis 8 auch ein Bedienpult 10, welches zumindest ein Anzeigeelement 9, welches hier als Bildschirm dargestellt ist, eine Steuer- beziehungsweise Rechenvorrichtung 11 und eine Tastatur 12 enthält. Die Ansteuerung der Maschinenelemente 1-8 erfolgt hier über Steuerleitungen 13.

Der Tastatur 12 kommt hier die Rolle des Eingabeterminals zu. Der Name Eingabeterminal umfasst jedoch auch andere Dateneingabemittel wie Touchscreens oder Spracherkennungsprogramme.

| **Bezugszeichenliste** | |
|---|---|
| 1 | Extruder |
| 2 | Blaskopf/Düse |
| 3 | Folienblase |
| 4 | abgequetschte Folie |
| 5 | Anzeigefeld |
| 6 | Kühlring |
| 7 | Schmelzezuleitung |
| 8 | a) Wickelstrecke |
| | b) Wickelstrecke |
| 9 | Anzeigeelement |
| 10 | Bedienpult |
| 11 | Rechenvorrichtung |
| 12 | Tastatur/Eingabeterminal |
| 13 | Steuerleitungen |
| 14 | Granulattrichter |
| 15 | bereits geschnittene Folienbahnen |
| 16 | |
| 17 | |
| 18 | |
| 19 | |
| 20 | |
| 21 | |
| 22 | |
| 23 | |
| 24 | |

## Patentansprüche

1. Bedienpult (10) für Folienextrusionsanlagen, welches zumindest folgende Elemente umfasst,
- ein Eingabeterminal, an welchem Funktionsparameter der Folienextrusionsanlagen einstellbar sind,
- eine Anzeigevorrichtung (9), auf welcher Elemente der Folienextrusionsanlage wie Extruder, Folienblase (3) oder Düse (2) dargestellt sind und gegebenenfalls ihre Betriebsparameter angezeigt werden,
**gekennzeichnet durch**
eine Anzeigevorrichtung (9), auf der die Anordnung von Elementen der Extrusionsanlage wie Extrudern (1) oder Wickelstellen (8a,8b) zu dem Blaskopf (2) und/oder der Folienblase (3) zumindest teilweise zumindest zweidimensional dargestellt ist.

2. Bedienpult (10) nach Anspruch 1
**dadurch gekennzeichnet, dass**
die Düse (2) beziehungsweise die Folienblase (3) im Zentrum der zweidimensionalen Anordnung von Extrudern (1) darstellbar ist.

3. Bedienpult (10) nach einem der vorstehenden Ansprüche
**dadurch gekennzeichnet, dass**
die zumindest zweidimensionale Anordnung von Elementen der Extrusionsanlage wie Extrudern (1) oder Wickelstellen (8a,8b) zumindest teilweise in einer Draufsicht darstellbar ist.

4. Bedienpult (10) nach einem der vorstehenden Ansprüche
**dadurch gekennzeichnet, dass**
die zumindest zweidimensionale Anordnung von Elementen der Extrusionsanlage wie Extrudern (1) oder Wickelstellen (8a,8b) zumindest teilweise in einer perspektivischen Draufsicht darstellbar ist.

5. Bedienpult (10) nach einem der vorstehenden Ansprüche
**dadurch gekennzeichnet, dass**
die Düse (2) beziehungsweise Blase (3) in einer Frontalansicht darstellbar ist.

6. Bedienpult (10) nach einem der vorstehenden Ansprüche
**dadurch gekennzeichnet, dass**
die Wickelvorrichtung unterhalb der Anordnung der Extruder (1) darstellbar ist.

7. Bedienpult (10) nach einem der vorstehenden Ansprüche
**dadurch gekennzeichnet, dass**
neben den Extrudern (1) auch die zweidimensionale Anordnung der ihnen zugeordneten Granulattrichter beziehungsweise der ihnen zugeordneten Dosimetrieeinheiten graphisch darstellbar ist.

8. Bedienpult (10) nach einem der vorstehenden Ansprüche
**dadurch gekennzeichnet, dass**
diejenigen auf der Anzeigevorrichtung (9) dargestellten Funktionselemente der Extrusionsanlage (1), deren Betriebsparameter außerhalb eines Sollbereichs liegen, hervorgehoben dargestellt werden.

9. Bedienpult (10) nach Anspruch 9
**dadurch gekennzeichnet dass**
Funktionselemente der Extrusionsanlage (1), deren Betriebsparameter außerhalb eines Sollbereichs liegen, durch rote Farbe hervorgehoben werden.

10. Bedienpult (10) nach einem der vorstehenden Ansprüche
**dadurch gekennzeichnet, dass**
das Bedienpult (10) gemäß seiner tatsächlichen Anordnung zu der Folienblase (3) beziehungsweise dem Blaskopf (2) zwischen tatsächlich benachbarten Elementen der Extrusionsanlage (1) dargestellt wird.

11. Verfahren zur Bedienung und/oder Überwachung von Folienextrusionsanlagen (1),
- wobei die Überwachung und Bedienung von einem Bedienpult (10) vorgenommen wird, welches eine Anzeigevorrichtung (9) umfasst,
- auf welcher Elemente der Folienextrusionsanlage wie Extruder (1), Folienblase (3) oder Düse (2) dargestellt sind und gegebenenfalls ihre Betriebsparameter angezeigt werden,
**dadurch gekennzeichnet dass**
auf der Anzeigevorrichtung die Anordnung von Elementen der Extrusionsanlage wie Extrudern (1) oder Wickelstellen (8a,8b) zu dem Blaskopf (2) und/oder der Folienblase (3) zumindest teilweise zumindest zweidimensional dargestellt werden.

## Claims

1. Operating panel (10) for the film extrusion plants that includes at least the following elements,
- an input terminal at which functional parameter of the film extrusion plants can be set,
- an indicator device (9) on which elements of the film extrusion plant such as extruders, film bubble (3) or nozzle (2) are illustrated and, where necessary, their operating parameters are indicated,
**characterized by**
an indicator device (9) where the alignment of elements of the extrusion plant such as extruders (1) or winding positions (8a, 8b) to the blowing head (2) and/or the film bubble (3) can be displayed on at least partly and at least two-dimensionally.

2. Operating panel (10) in accordance with claim 1
**characterized by the fact**
that the nozzle (2) respectively the film bubble (3) can be displayed in the centre of the two-dimension arrangement of extruders (1).

3. Operating panel (10) in accordance with one of the preceding claims,
**characterized by the fact**
that the at least two-dimensional arrangement of elements of the extrusion plants such as extruders (1) or winding positions (8a, 8b) can be displayed at least partly in a top view.

4. Operating panel (10) in accordance with one of the preceding claims,
**characterized by the fact**
that the at least two-dimensional arrangement of elements of the extrusion plants such as extruders (1) or winding positions (8a, 8b) can be displayed at least partly in a perspective top view.

5. Operating panel (10) in accordance with one of the preceding claims,
**characterized by the fact**
that the nozzle (2) respectively bubble (3) can be displayed in a front view.

6. Operating panel (10) in accordance with one of the preceding claims,
**characterized by** the fact
that the winding equipment can be displayed below the arrangement of the extruders (1).

7. Operating panel (10) in accordance with one of the preceding claims,
**characterized by the fact**
that apart from the extruders (1) also the two-dimensional arrangement of the resin hoppers allocated to them and/or the dosimetry units assigned to them can be illustrated graphically.

8. Operating panel (10) in accordance with one of the preceding claims,
**characterized by the fact**
that the functional elements of the extrusion plant (1) displayed on the indicator device (9) whose operating parameters lie outside a target range, are highlighted on the indicator device (9).

9. Operating panel (10) in accordance with claim 9,
**characterized by the fact**
that functional elements of the extrusion plant (1) whose operating parameters lie outside a target range are highlighted in red colour.

10. Operating panel (10) in accordance with one of the preceding claims,
**characterized by the fact**
that the operating panel (10) is illustrated as per its actual alignment to the film bubble (3) and/or the blower head (2) between actually adjoining elements of the extrusion plant (1).

11. Process for the operation and/or monitoring of film extrusion plants (1),
- whereby the monitoring and operation is carried out by an operating panel (10) that contains an indicator device (9),
- on which elements of the film extrusion plant such as extruders (1), film bubble (3) or nozzle (2) are displayed and if necessary their operating parameters are indicated,
**characterized by the fact**
that on the indicator device the arrangement and alignment of elements of the extrusion plant such as extruders (1) or winding positions (8a, 8b) to the blowing head (2) or the film bubble (3) are displayed at least partly and at least two-dimensionally.

## Revendications

1. Pupitre de commande (10) pour des installations d'extrusion de feuilles, qui comprend au moins les éléments suivants,
- un terminal d'entrée auquel sont réglables des paramètres de fonctionnement des installations d'extrusion de feuilles,
- un dispositif d'affichage (9) sur lequel sont représentés des éléments de l'installation d'extrusion de feuilles comme l'extrudeuse, la bulle en feuille (3) ou la buse (2) et sont représentés le cas échéant ses paramètres de fonctionnement,
**caractérisé par**
un dispositif d'affichage (9) sur lequel est représenté, au moins partiellement, au moins bidimensionnellement, l'agencement d'éléments de l'installation d'extrusion comme des extrudeuses (1) ou des emplacements d'enroulement (8a, 8b) à la tête de soufflage (2) et/ou la bulle en feuille (3).

2. Pupitre de commande (10) selon la revendication 1, **caractérisé en ce que** la buse (2) respectivement la bulle en feuille (3) peut être représentée dans le centre de l'agencement bidimensionnel d'extrudeuses (1).

3. Pupitre de commande (10) selon l'une des revendications précédentes, **caractérisé en ce que** l'agencement au moins bidimensionnel d'éléments de l'installation d'extrusion, comme d'extrudeuses (1) ou d'emplacements d'enroulement (8a, 8b) peut être représenté au moins partiellement en une vue de dessus.

4. Pupitre de commande (10) selon l'une des revendications précédentes, **caractérisé en ce que** l'agencement au moins bidimensionnel d'éléments de l'installation d'extrusion, comme d'extrudeuses (1) ou d'emplacements d'enroulement (8a, 8b) peut être représenté au moins partiellement en une vue en perspective.

5. Pupitre de commande (10) selon l'une des revendications précédentes, **caractérisé en ce que** la buse (2) respectivement la bulle (3) peut être représentée en une vue frontale.

6. Pupitre de commande (10) selon l'une des revendications précédentes, **caractérisé en ce que** le dispositif d'enroulement peut être représenté en dessous de l'agencement des extrudeuses (1).

7. Pupitre de commande (10) selon l'une des revendications précédentes, **caractérisé en ce que**, à côté des extrudeuses (1), également l'agencement bidimensionnel des trémies de granulats associées à celles-ci respectivement des unités de dosimétrie associées à celles-ci peut être représenté graphiquement.

8. Pupitre de commande (10) selon l'une des revendications précédentes, **caractérisé en ce que** les éléments fonctionnels de l'installation d'extrusion (1) représentés sur le dispositif d'affichage (9), dont les paramètres de fonctionnement se situent en dehors d'une plage de consigne, sont représentés d'une manière accentuée.

9. Pupitre de commande (10) selon la revendication 9, **caractérisé en ce que** des éléments fonctionnels de l'installation d'extrusion (1), dont les paramètres de fonctionnement se situent en dehors d'une plage de consigne, sont accentués par la couleur rouge.

10. Pupitre de commande (10) selon l'une des revendications précédentes, **caractérisé en ce que** le pupitre de commande (10), selon son agencement effectif à la bulle en feuille (3) respectivement la tête de soufflage (2), est représenté entre des éléments effectivement avoisinants de l'installation d'extrusion (1).

11. Procédé de commande et/ou de surveillance d'installations d'extrusion de feuilles (1),
- où la surveillance et commande sont effectuées à partir d'un pupitre de commande (10), qui comprend un dispositif d'affichage (9),
- sur lequel sont représentés des éléments de l'installation d'extrusion de feuilles comme l'extrudeuse (1), la bulle en feuille (3) ou la buse (2) et, le cas échéant, ses paramètres de fonctionnement sont affichés,
**caractérisé en ce que**
sont représentés au moins partiellement, au moins bidimensionnellement sur le dispositif d'affichage l'agencement d'éléments de l'installation d'extrusion, comme d'extrudeuses (1) ou d'emplacements d'enroulement (8a, 8b) à la tête de soufflage (2) et/ou de la bulle en feuille (3).
